# EUROPEAN PATENT APPLICATION

(11) **EP 2 530 920 A1**
(43) Date of publication of application: **05.12.2012**
(21) Application number: 11168540.0
(22) Date of filing: 01.06.2011
(51) Int. Cl.: H04M 1/725, H04W 8/18, H04W 48/18

(54) **Using multiple user accounts on a mobile device**

(71) Applicant: Research In Motion Limited, Waterloo, ON N2L 3W8 (CA)
(72) Inventor: Ferrazzini, Axel, Belgium (FR); Parry, Thomas Owen, Waterloo, Ontario N2L 3W8 (CA); Carter, Jason Lee, Sunrise, FL Florida 33323 (US); Clarke, David, Bellevue, WA Washington 98008 (US); Omar, Salim Hayder, Waterloo, Ontario N2L 3W8 (CA); Godfrey, James A., Waterloo, Ontario N2L 3W8 (CA); Alfano, Nicholas Patrick, Stratford-Upon-Avon, Warwickshire CV37 7JS (GB); Smith, Christopher David, Mississauga, Ontario L4W 0B5 (CA)
(74) Representative: Greenaway, Martin William

(57) **Abstract**

A method for automated selection of a user account is provided. The method includes analyzing a plurality of parameters associated with operation of plurality of user accounts on a mobile device and selecting a user account based on the analysis.

## Description

A Subscriber Identity Module (SIM) can contain a unique user identification number and other information related to a user of a mobile telephone or a similar device. It is possible for two or more SIM cards to be installed in a single mobile device. In some cases, each SIM card may be associated with a separate subscriber account with the same service provider. For example, one SIM card may be used for work-related calls and another for personal calls, but the work account and the personal account may use the same service provider. Alternatively, each SIM card may be associated with a different service provider. A single mobile device with multiple SIM cards associated with different accounts can eliminate the need for a user to carry two separate devices.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.

Figure 1 illustrates a mobile device and a network element, according to an embodiment of the disclosure.

Figure 2 illustrates a method for automated selection of a user account, according to an embodiment of the disclosure.

Figure 3 illustrates a processor and related components suitable for implementing the several embodiments of the present disclosure.

### DETAILED DESCRIPTION

It should be understood at the outset that although illustrative implementations of one or more embodiments of the present disclosure are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

A SIM is typically a component of a SIM card that can be inserted into a mobile device in order to associate that device with the user identified by the SIM. SIM cards can have various form factors such as a full size that is approximately the size of a credit card, a smaller mini size, and a still smaller micro size. Other cards, such as the Universal Integrated Circuit Card (UICC), the Universal Subscriber Identity Module (USIM) card, or the Removable User Identity Module (R-UIM) card, may function in a similar manner. Alternatively, a SIM could be stored on an embedded UICC (eUICC) or a similar software-based SIM module. One or more profiles can be stored in a eUICC. A profile is a set of data that may include a file structure, applications, and eUICC access credentials to access a network. Any such card or software module will be referred to herein as a SIM card, but it should be understood that such entities do not necessarily have the form factor of a card. Also, as used herein, the term "mobile device" can refer to portable equipment such as telephones, smart phones, personal digital assistants, tablet, handheld, or laptop computers, and similar devices that have wireless telecommunications capabilities.

In some cases, a mobile device may contain only a single SIM card and still be associated with two or more identities or accounts. For example, a device may be capable of connecting to a cellular network via a SIM card and may also be capable of connecting without the use of a SIM card to a short-range technology-based network such as a WiFi network. When connected to a short-range network, the device may be able to place and receive calls using a Voice over Internet Protocol (VoIP) technology or a similar protocol.

Devices that support a plurality of user accounts typically require the user to select one of the accounts to use based on the current circumstances and the desired services or functions, such as voice calls, messaging, or data transmissions. That is, the user may need to determine and manually select the most appropriate user account to use for the task that is to be performed, such as placing or receiving a voice call or a data call.

Embodiments of the present disclosure provide for the automated selection of a user account from a plurality of user accounts on a single mobile device, wherein an outgoing call is managed according to parameters related to the selected user account. The selection of a user account can be made without user intervention or with minimal user intervention. The determination of which user account to use can be based on an analysis of a plurality of parameters associated with the operation of the mobile device and/or the operation of the user accounts. The parameters might include the type of user account (e.g., work or personal), billing rate, battery level, bandwidth, data rate, efficiency of application execution, available technology, and/or other contextual information. While some capability may still be provided for a user to manually provide inputs that can affect the selection of which account to use, it is expected that the decision of which user account to use will be made automatically on behalf of the user such that an appropriate selection is made. It may also be expected that, in many cases, the selection of a user account will entail the selection of one of a plurality of SIM cards, where each SIM card is associated with a different user account. However, in some cases, the selection of a user account may entail a selection between a user account associated with a SIM card and a user account associated with an internet-based communication protocol.

A component that performs this analysis and selection may reside on the mobile device or on a network element to which the mobile device has access, or this functionality may be divided between components on the mobile device and on the network element. Such a component may have access to a plurality of rules that specify how the parameters are to be analyzed in order to make an appropriate user account selection. The rules may be established by the device user and/or by an administrator with some control over the operation of the device.

As mentioned previously, one user account on a mobile device may be associated with a first type of account and another user account on the same device may be associated with a second type of account. In some cases, one user account may be a work-related account and another user account may be a personal account, but in other cases, the distinction between types of accounts may be based on account characteristics other than a work account and a personal account. However, for simplicity, the two user accounts may be referred to herein as a work account and a personal account. In an embodiment, one of the user account parameters used to determine which user account to use is the type of user account (e.g., work or personal). The analysis of this parameter can be done in at least two different ways.

A work phone number will typically be associated with a work user account, and a personal phone number will typically be associated with a personal user account. Therefore, it may be possible to associate a call with an account based on the number that is called or on the number from which a call is placed. However, since work calls are sometimes made to or from a personal number, and personal calls are sometimes made to or from a work number, assigning calls to an account based on the called number or the calling number may not always be appropriate.

In an embodiment, outgoing calls are automatically handled by one of two user accounts on a mobile device based on a previously performed mapping of the Calling Line Identifier of an incoming call to the user's address book on the mobile device. For example, if an incoming call is made to a personal account on the mobile device, the address book may retain an indication that the number of the incoming call is a personal number. If, at a later time, the user places an outgoing call to that number, the appropriate user account to handle the outgoing call can then be selected based on the indication in the address book.

In another embodiment, outgoing calls are automatically handled by one of two user accounts on a mobile device based on the time of day and the day of the week that an incoming call was previously received. For example, if an incoming call is received during regular work hours, the number of that call can be categorized as a work-related number. If an incoming call is received outside of regular work hours, the number of that call can be categorized as a personal number. If an outgoing call is made at a later time to a number that has been categorized in this way, the appropriate user account to handle the outgoing call can then be selected based on the categorization. The user may be able to specify the days of the week and the times of day that are to be considered the regular work hours, or these times may be set by an administrator that has some control over the operation of the mobile device. Also, the user may be able to specify exceptions to this procedure. For example, calls to the user's supervisor may always be handled by the work user account regardless of the time of day a call was previously received from the supervisor. As another exception, calls to the user's spouse may always be handled by the personal user account regardless of the time of day a call was previously received from the spouse.

In another embodiment, an outgoing call during regular work hours may use the work user account, and an outgoing call outside of regular work hours may use the personal work account, if the called number has not been categorized previously or if the called number is not in the address book.

As mentioned previously, the determination of which user account to use can be based on an analysis of one or more parameters associated with the operation of the mobile device and/or the operation of the user accounts. In addition to or as an alternative to the user account parameter, the determination could be based on one or more of a billing rate, a battery level on the mobile device, an application that the user has chosen to execute on the mobile device, a type of service currently available to the mobile device, and a bandwidth. Embodiments related to each of these parameters will now be considered in turn.

Regarding the billing rate parameter, each user account may be associated with a different billing rate, and the rates may vary depending on the user's billing plan, the time of day, the day of the week, the user's current roaming or non-roaming status, whether the call is a voice call or a data call, and other factors. A component on a mobile device or available to the mobile device may have access to such information and may be capable of using this information to compare the cost of similar calls made under each of a plurality of different accounts. The component may then select the user account that would charge the least for the call.

In some cases, information about the billing plans can be manually entered into a mobile device by the user. For example, the user may specify that long distance voice calls should always use a first user account, and all other calls should use a second user account. In other cases, such information may be entered into a device by more sophisticated means. For example, a mobile device may be able to automatically gain access to billing rates from multiple service providers. In some such cases, the service providers may display their billing plan information on a web page, and a component on the mobile device or available to the mobile device may be able to retrieve and parse this information in order to make a cost comparison between calls made through different providers. In other such cases, a mobile device may be able to communicate with a network element that retains such information. For example, a server or similar network element may include a component that stores any information that may be needed to calculate the cost of a particular call made under the current circumstances. The mobile device may query this component to get real-time quotes from the service providers for the cost of a call and may then select the user account associated with the cheapest option. This last implementation may be useful for a user who is traveling and has no knowledge of the local billing rates. This option also allows real-time updates to be made to billing rates on the server, and the updates would then be available to multiple mobile devices. This may eliminate the need for updates to be made to multiple individual mobile devices.

Alternatively, selection of a user account based on the billing rate may depend on the type of call. For example, all data calls may be handled by a first user account, and all voice calls may be handled by a second user account. In another alternative, selection of a user account based on the billing rate may depend on the temporary use of a SIM card. For example, a user who is traveling overseas may buy a SIM card that allows local calls to be made at a low billing rate. That SIM card could be automatically selected for all local calls made while the user is in the area associated with that SIM card. All other calls may be handled by another user account on the device.

Regarding the battery level parameter, in some cases, if the battery level on the mobile device is below a threshold, a user account may be selected based on which account is currently associated with a stronger signal, since a stronger signal may allow the device to use less battery power. In other cases, if the battery level on the mobile device is below a threshold, a user account can be selected based on which account is associated with a technology that uses the less battery power. For example, 2G technologies typically use less power than 3G technologies. If one user account is associated with a 2G-based account and another user account is associated with a 3G-based account, the user account associated with the 2G-based account may be automatically selected when the battery level is below a threshold.

Regarding the parameter related to selection of an application for execution on a mobile device, there may be situations where, for example, a service provider does not allow applications such as VoIP to run over its network. As another example, an application may be known to perform more poorly over one operator network than over another. In such cases, a user account may be chosen that allows a specific application to execute or to execute efficiently. As another example, a company may not allow its employees to use a work account to access certain applications or web sites, such as social networking web sites. When a user attempts to execute an application or visit a web site that has restricted access through a first user account, a second user account may be automatically selected.

Regarding the service type parameter, it is possible that one user account may be associated with a short-range technology, such as WiFi or WiMAX, and that another user account may be associated with a wide-area technology. An automatic selection of one of the user accounts may be made based on which technology is more appropriate for the user's current circumstances. For example, a mobile device may have a user account that allows free voice calling over an internet-based protocol such as VoIP and may also have a user account that uses a wide-area technology-based protocol. If a short-range connection is currently available to such a device, the user account that uses the short-range connection may be automatically chosen if it provides an advantage over the user account that uses the wide-area technology. That is, if the cost, the quality of service, or some other parameter associated with placing a call using an internet-based communications protocol is advantageous compared to placing the call using a SIM card associated with a wide-area technology, the call may be automatically placed using the short-range technology.

Regarding the bandwidth parameter, if two user accounts provide different bandwidths, a user account may be automatically chosen that provides a more appropriate bandwidth capacity for a particular application. For example, emails may be received over 2G and thus may need a relatively lower bandwidth, while video streaming may be performed over at least 3G or peer-to-peer exchanges over WiFi and thus may need a relatively higher bandwidth. When an application with a particular bandwidth requirement is executed, a user account that can provide an appropriate bandwidth may be automatically selected.

In an embodiment, as described in more detail below, one or more of the above-described parameters are automatically analyzed for a mobile device associated with a plurality of user accounts. One of the user accounts is then automatically selected based on the analysis. The selection typically results in the modification of at least one of the parameters or some combination of the parameters. The analysis of the parameters and the selection of the user account can be performed by a component in the mobile device, a component in a network element to which the mobile device has access, or by a combination of such components.

In addition, a capability may be provided to manage the interactions between the different user accounts. For example, if a mobile device has two user accounts associated with different carriers, and if a user account associated with a first carrier has been selected because the first carrier offers a lower billing rate than a second carrier under the current circumstances, the second carrier may be prevented from overriding the user account selection and switching to its service. As another example, there may be a set of rules to determine which user account should be made active when a mobile device is turned on. In yet another example, a first service provider may be allowed to require a user to disable a user account associated with a second service provider if the user wishes to use the first service provider's network. In general, there may be some intelligence that designates which of a plurality of service providers is allowed to act as an administrator at a given time over a plurality of user accounts on a single mobile device. This intelligence may reside in the same component that performs the parameter analysis and user account selection or may at least partially reside elsewhere.

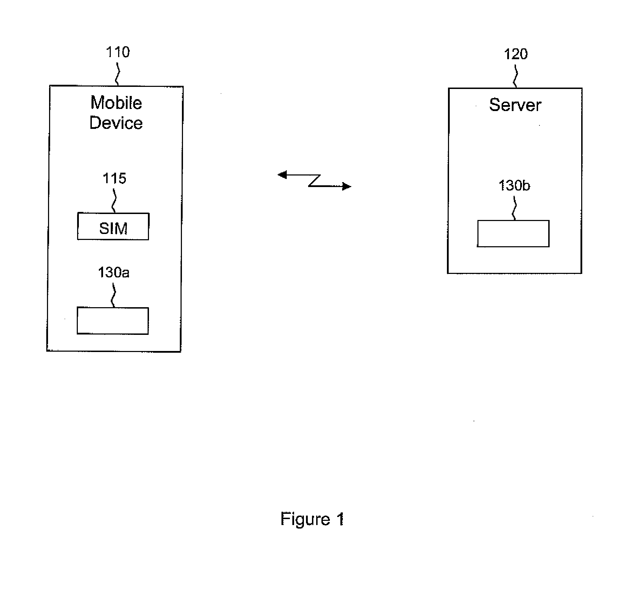

Figure 1 illustrates an embodiment of a system that may include such a component. A mobile device 110 can communicate wirelessly with a server 120 or a similar network element. The mobile device 110 contains at least one SIM card 115 that is associated with at least one user account. At least two user accounts can be accessed via the mobile device 110. A component 130 that can perform the parameter analysis and user account selection described above can reside in the mobile device 110. Alternatively, such a component 130 can reside in the server 120, or some portions of the functionality of the component 130a can reside in the mobile device 110 and other portions of the functionality of the component 130b can reside in the server 120. In addition, the component 130 may have a capability to manage the interactions between the different user accounts.

As an example of how such a component 130 may function, a plurality of rules may be established that specify how the component 130 is to evaluate the parameters described above. The rules may be established by the user of the mobile device 110 or by an administrator, service provider, or other entity that has some authority over how the mobile device 110 is used. Alternatively, some rules may be established by the user and other rules may be established by some other entity. The rules may be stored on the mobile device 110, on the server 120, in the component 130, or in some combination of these elements.

For example, the user may establish rules specifying that a user account is to be selected based on whether an outgoing call is a personal call or a work call. The determination of whether an outgoing call is a personal call or a work call may be based on a previously performed mapping of the number of a previously received incoming call to a number in the user's address book and/or based on the day and/or the time of day that an incoming call was previously received. The user may additionally or alternatively establish rules specifying that a user account is to be selected based on the lowest currently available cost for an outgoing call, taking into account such factors as whether the call is a voice call or a data call, the user's billing plan, the user's current location, and the current time of day. The user may additionally or alternatively establish rules specifying that a user account is to be selected based on the type of service currently available, such as designating that a user account associated with WiFi service should be used when WiFi service is available and that a user account associated with wide-area service should be used otherwise.

An administrator, service provider, or other entity may establish rules specifying that a user account is to be selected based on which user account conserves more battery power when battery life is low, and/or based on which user account can better support an application launched by the user, and/or based on the bandwidth that is more appropriate to execute a selected application. In other examples, some of these rules that are described as being established by the user may be established by the other entity, and some of these rules that are described as being established by the other entity may be established by the user.

The component 130 can analyze any combination of these rules and use the analysis to select a user account. The analysis of the rules may involve a prioritization of some of these parameters over other parameters. For example, a rule may state that the user account that provides the lowest billing rate for a call is to be selected, regardless of how such a selection impacts the other parameters. As another example, a rule may state that the higher of two available bandwidths is to be selected unless the cost of selecting the higher bandwidth exceeds a pre-established amount. In other cases, the selection of a user account may be based on a consideration of the benefits and drawbacks of more complex combinations of the parameters.

When circumstances change, such as the placing or receiving of another call or a change in the time of day or the user's location, the component 130 may perform another parameter analysis to again select a user account that is determined by the rules to be appropriate for the new circumstances. The component 130 may also prevent a selected parameter or set of parameters from being overridden by a service provider associated with a user account that is not currently in use.

It is expected that in some cases, the selection of a user account under new circumstances will result in the improvement of at least one of the parameters. For example, cost may be reduced, bandwidth may be increased, or battery life may be extended. However, it is possible that no improvement of a parameter could occur in some circumstances. For example, if a user moves to a different location while on a call, and the user account in use at the previous location is not available at the new location, it is possible for the user account selected at the new location to be associated with parameters that are less desirable than those available at the previous location.

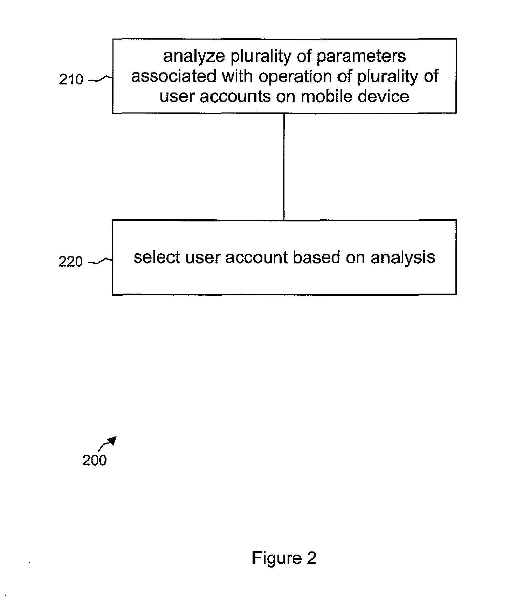

Figure 2 illustrates an embodiment of a method 200 for automated selection of a user account. At block 210, a plurality of parameters associated with the operation of a plurality of user accounts on a single mobile device are analyzed. At block 220, a user account is selected based on the analysis of the parameters.

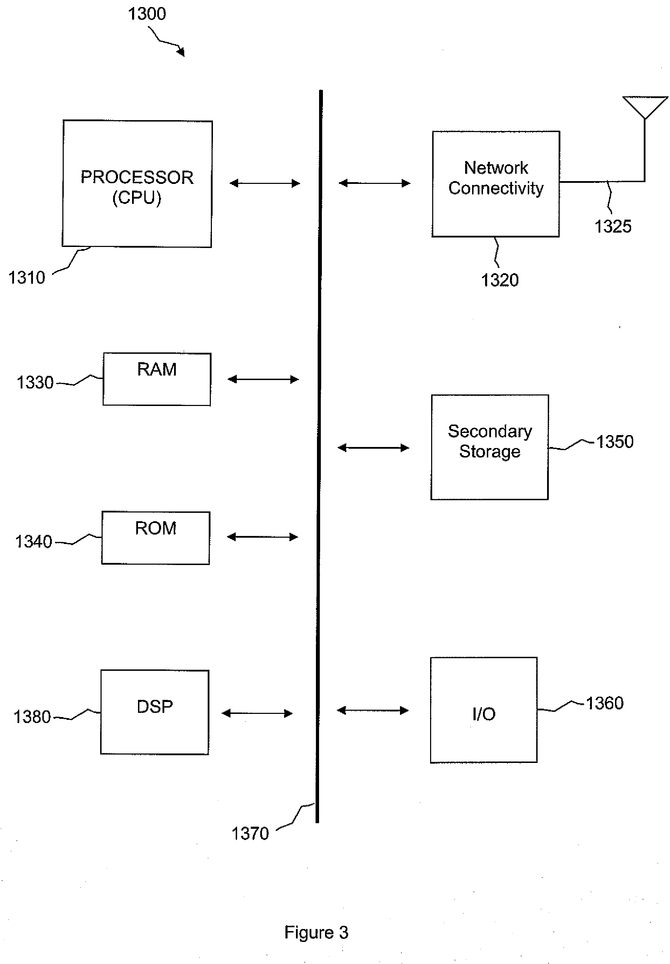

The UE 110, server 120, and other elements described above may include a processing component that is capable of executing instructions related to the actions described above. Figure 3 illustrates an example of a system 1300 that includes a processing component 1310 suitable for implementing one or more embodiments disclosed herein. In addition to the processor 1310 (which may be referred to as a central processor unit or CPU), the system 1300 may include network connectivity devices 1320, random access memory (RAM) 1330, read only memory (ROM) 1340, secondary storage 1350, and input/output (I/O) devices 1360. These components may communicate with one another via a bus 1370. In some cases, some of these components may not be present or may be combined in various combinations with one another or with other components not shown. These components may be located in a single physical entity or in more than one physical entity. Any actions described herein as being taken by the processor 1310 may be taken by the processor 1310 alone or by the processor 1310 in conjunction with one or more components shown or not shown in the drawing, such as a digital signal processor (DSP) 1380. Although the DSP 1380 is shown as a separate component, the DSP 1380 may be incorporated into the processor 1310.

The processor 1310 executes instructions, codes, computer programs, or scripts that it may access from the network connectivity devices 1320, RAM 1330, ROM 1340, or secondary storage 1350 (which may include various disk-based systems such as hard disk, floppy disk, or optical disk). While only one CPU 1310 is shown, multiple processors may be present. Thus, while instructions may be discussed as being executed by a processor, the instructions may be executed in parallel, serially, or otherwise by one or multiple processors. The processor 1310 may be implemented as one or more CPU chips.

The network connectivity devices 1320 may take the form of modems, modem banks, Ethernet devices, universal serial bus (USB) interface devices, serial interfaces, token ring devices, fiber distributed data interface (FDDI) devices, wireless local area network (WLAN) devices, radio transceiver devices such as code division multiple access (CDMA) devices, global system for mobile communications (GSM) radio transceiver devices, worldwide interoperability for microwave access (WiMAX) devices, digital subscriber line (xDSL) devices, data over cable service interface specification (DOCSIS) modems, and/or other devices for connecting to networks. These network connectivity devices 1320 may enable the processor 1310 to communicate with the Internet or one or more telecommunications networks or other networks from which the processor 1310 may receive information or to which the processor 1310 may output information.

The network connectivity devices 1320 may also include one or more transceiver components 1325 capable of transmitting and/or receiving data wirelessly in the form of electromagnetic waves, such as radio frequency signals or microwave frequency signals. Alternatively, the data may propagate in or on the surface of electrical conductors, in coaxial cables, in waveguides, in optical media such as optical fiber, or in other media. The transceiver component 1325 may include separate receiving and transmitting units or a single transceiver. Information transmitted or received by the transceiver component 1325 may include data that has been processed by the processor 1310 or instructions that are to be executed by processor 1310. The data may be ordered according to different sequences as may be desirable for either processing or generating the data or transmitting or receiving the data.

The RAM 1330 may be used to store volatile data and optionally to store instructions that are executed by the processor 1310. The ROM 1340 may be a non-volatile memory device that typically has a smaller memory capacity than the memory capacity of the secondary storage 1350. ROM 1340 may be used to store instructions and perhaps data that are read during execution of the instructions. Access to both RAM 1330 and ROM 1340 is typically faster than to secondary storage 1350. The secondary storage 1350 is typically comprised of one or more disk drives or tape drives and may be used for non-volatile storage of data or as an over-flow data storage device if RAM 1330 is not large enough to hold all working data. Secondary storage 1350 may be used to store programs that are loaded into RAM 1330 when such programs are selected for execution.

The I/O devices 1360 may include liquid crystal displays (LCDs), touch screen displays, keyboards, keypads, switches, dials, mice, track balls, voice recognizers, card readers, paper tape readers, printers, video monitors, or other input/output devices. Also, the transceiver 1325 may be considered to be a component of the I/O devices 1360 instead of or in addition to being a component of the network connectivity devices 1320.

In an embodiment, a method for automated selection of a user account is provided. The method includes analyzing a plurality of parameters associated with operation of a plurality of user accounts on a mobile device. The method further includes selecting one of the user accounts based on the analysis.

In another embodiment, a mobile device is provided. The mobile device includes a component configured to analyze a plurality of parameters associated with operation of a plurality of user accounts on the mobile device, and further configured to automatically select one of the user accounts based on the analysis. A first user account might be associated with one of a first SIM card or a first eUICC and a second user account might be associated with one of a second SIM card or a second eUICC. A first user account might be associated with one of a SIM card or a eUICC and a second user account might use an internet-based communications protocol. The plurality of parameters might include at least one of: a type of account associated with each of the plurality of user accounts; a billing rate associated with each of the plurality of user accounts; a battery usage associated with each of the plurality of user accounts; execution of an application associated with each of the plurality of user accounts; a type of wireless communications technology associated with each of the plurality of user accounts; and a bandwidth associated with each of the plurality of user accounts. The plurality of parameters might include a type of account associated with each of the plurality of user accounts, and a Calling Line Identifier for an incoming call might be mapped to a number in an address book on the mobile device, the address book specifying which numbers for outgoing calls are to be associated with a first user account type and which numbers for outgoing calls are to be associated with a second user account type. The plurality of parameters might include a type of account associated with each of the plurality of user accounts, and a phone number of a first incoming call might be categorized as being associated with a first user account type and a phone number of a second incoming call might be categorized as being associated with a second user account type, the respective categorizations being based on the respective times and days when the incoming calls are received. The plurality of parameters might include a billing rate associated with each of the plurality of user accounts, and one of the user accounts might be selected based on a billing rate associated with the selected user account being lower than another billing rate associated with another of the user accounts. One of the user accounts might be selected based on a wireless communications signal associated with the selected user account being stronger than another wireless communications signal associated with another of the user accounts. The plurality of parameters might include battery usage associated with each of the plurality of user accounts, and one of the user accounts might be selected based on a wireless communications technology associated with the selected user account using less battery power than another wireless communications technology associated with another of the user accounts. The plurality of parameters might include execution of an application associated with each of the plurality of user accounts, and one of the user accounts might be selected based on better performance of execution of the application. The plurality of parameters might include a type of wireless communications technology, and one of the user accounts might be selected based on a wireless communications technology associated with the selected user account being preferable under the current circumstances of the mobile device to another wireless communications technology associated with another of the user accounts. The plurality of parameters might include bandwidth for execution of an application, and one of the user accounts might be selected based on the bandwidth associated with the selected user account being more appropriate for the application than another bandwidth associated with another of the user accounts. The component might be further configured to allow a wireless communications service provider associated with one of the plurality of user accounts to act as an administrator for a limited period of time over the operation of the plurality of user accounts.

In another embodiment, a network element is provided. The network element includes a component configured to provide information to a mobile device that allows the mobile device to automatically select one of a plurality of user accounts on the mobile device based on an analysis of at least one of a plurality of parameters associated with the plurality of user accounts.

While several embodiments have been provided in the present disclosure, it should be understood that the disclosed systems and methods may be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the spirit and scope disclosed herein.

## Claims

1. A method for automated selection of a user account from a plurality of user accounts on a mobile device, the method comprising:
analyzing a plurality of parameters associated with operation of the plurality of user
accounts; and
selecting one of the user accounts based on the analysis

2. The method of claim 1, wherein a first user account is associated with one of a first Subscriber Identity Module (SIM) card or a first Embedded Universal Integrated Circuit Card (eUICC) and a second user account is associated with one of a second SIM card or a second eUICC.

3. The method of claim 1, wherein a first user account is associated with one of a SIM card or a eUICC and a second user account uses an internet-based communications protocol.

4. The method of claim 1, wherein the plurality of parameters includes at least one of:
a type of account associated with each of the plurality of user accounts;
a billing rate associated with each of the plurality of user accounts;
a battery usage associated with each of the plurality of user accounts;
execution of an application associated with each of the plurality of user accounts;
a type of wireless communications technology associated with each of the plurality
of user accounts; and
a bandwidth associated with each of the plurality of user accounts.

5. The method of claim 1, wherein the plurality of parameters includes a type of account associated with each of the plurality of user accounts, and wherein a Calling Line Identifier for an incoming call is mapped to a number in an address book on the mobile device, the address book specifying which numbers for outgoing calls are to be associated with a first user account type and which numbers for outgoing calls are to be associated with a second user account type.

6. The method of claim 1, wherein the plurality of parameters includes a type of account associated with each of the plurality of user accounts, and wherein a phone number of a first incoming call is categorized as being associated with a first user account type and a phone number of a second incoming call is categorized as being associated with a second user account type, the respective categorizations being based on the respective times and days when the incoming calls are received.

7. The method of claim 1, wherein the plurality of parameters includes a billing rate associated with each of the plurality of user accounts, and wherein one of the user accounts is selected based on a billing rate associated with the selected user account being lower than another billing rate associated with another of the user accounts.

8. The method of claim 1, wherein one of the user accounts is selected based on a wireless communications signal associated with the selected user account being stronger than another wireless communications signal associated with another of the user accounts.

9. The method of claim 1, wherein the plurality of parameters includes battery usage associated with each of the plurality of user accounts, and wherein one of the user accounts is selected based on a wireless communications technology associated with the selected user account using less battery power than another wireless communications technology associated with another of the user accounts.

10. The method of claim 1, wherein the plurality of parameters includes execution of an application associated with each of the plurality of user accounts, and wherein one of the user accounts is selected based on better performance of execution of the application.

11. The method of claim 1, wherein the plurality of parameters includes a type of wireless communications technology, and wherein one of the user accounts is selected based on a wireless communications technology associated with the selected user account being preferable under the current circumstances of the mobile device to another wireless communications technology associated with another of the user accounts.

12. The method of claim 1, wherein the plurality of parameters includes bandwidth for execution of an application, and wherein one of the user accounts is selected based on the bandwidth associated with the selected user account being more appropriate for the application than another bandwidth associated with another of the user accounts.

13. The method of claim 1, wherein a wireless communications service provider associated with one of the plurality of user accounts acts as an administrator for a limited period of time over the operation of the plurality of user accounts.

14. A mobile device comprising:
a component configured to analyze a plurality of parameters associated with
operation of a plurality of user accounts on the mobile device, and further configured to automatically select one of the user accounts based on the analysis.

15. A network element comprising, comprising:
a component configured to provide information to a mobile device that allows the
mobile device to automatically select one of a plurality of user accounts on the mobile device based on an analysis of at least one of a plurality of parameters associated with the plurality of user accounts.

## Amended claims

### Amended claims in accordance with Rule 137(2) EPC.

**1.** A method for automated selection of a user account from a plurality of user accounts on a mobile device (1300), the method comprising the steps of:
analyzing a plurality of parameters (210) associated with operation of the plurality of user accounts;
selecting (220) one of the user accounts based on the analysis; and
managing a communication according to parameters related to the selected user account; and
wherein the plurality of parameters (210) includes a type of account associated with each of the plurality of user accounts, and wherein a Calling Line Identifier for an incoming call (1320) is mapped to a number in an address book (1350) on the mobile device (1300), the address book (1350) specifying which numbers for outgoing calls (1320) are to be associated with a first user account type and which numbers for outgoing calls (1320) are to be associated with a second user account type.

**2.** The method of claim 1, wherein a first user account is associated with one of a first Subscriber Identity Module, SIM, card (115) or a first Embedded Universal Integrated Circuit Card, eUICC, and a second user account is associated with one of a second SIM card (115) or a second eUICC.

**3.** The method of claim 1, wherein a first user account is associated with one of a SIM card (115) or a eUICC and a second user account uses an internet-based communications protocol.

**4.** The method of claim 1, wherein the plurality of parameters (210) includes at least one of:
a type of account associated with each of the plurality of user accounts;
a billing rate associated with each of the plurality of user accounts;
a battery usage associated with each of the plurality of user accounts;
execution of an application associated with each of the plurality of user accounts;
a type of wireless communications technology associated with each of the plurality of user accounts; and
a bandwidth associated with each of the plurality of user accounts.

**5.** The method of claim 1, wherein the plurality of parameters (210) includes a type of account associated with each of the plurality of user accounts, and wherein a phone number of a first incoming call (1320) is categorized as being associated with a first user account type and a phone number of a second incoming call (1320) is categorized as being associated with a second user account type, the respective categorizations being based on the respective times and days when the incoming calls (1320) are received.

**6.** The method of claim 1, wherein the plurality of parameters (210) includes a billing rate associated with each of the plurality of user accounts, and wherein one of the user accounts is selected (220) based on a billing rate associated with the selected user account being lower than another billing rate associated with another of the user accounts.

**7.** The method of claim 1, wherein one of the user accounts is selected (220) based on a wireless communications signal (1320) associated with the selected (220) user account being stronger than another wireless communications signal (1320) associated with another of the user accounts.

**8.** The method of claim 1, wherein the plurality of parameters (210) includes battery usage associated with each of the plurality of user accounts, and wherein one of the user accounts is selected (220) based on a wireless communications technology associated with the selected (220) user account using less battery power than another wireless communications technology associated with another of the user accounts.

**9.** The method of claim 1, wherein the plurality of parameters (210) includes execution of an application associated with each of the plurality of user accounts, and wherein one of the user accounts is selected (220) based on availability of services, expected application efficiency, or account restrictions.

**10.** The method of claim 1, wherein the plurality of parameters (210) includes a type of wireless communications technology, and wherein one of the user accounts is selected (220) based on lower transactional costs, greater reliability, greater bandwidth, or greater data rate relative to another of the user accounts.

**11.** The method of claim 1, wherein the plurality of parameters (210) includes bandwidth for execution of an application, and wherein one of the user accounts is selected (220) based on the bandwidth requirements for the application.

**12.** The method of claim 1, wherein a wireless communications service provider (120) associated with one of the plurality of user accounts acts as an administrator over the operation of the plurality of user accounts.

**13.** A mobile device (1300) comprising:
a component (1310) configured to analyze a plurality of parameters (210) associated with operation of a plural ity of user accounts on the mobile device (1300), automatically select one of the user accounts based on the analysis (220), and manage a communication according to parameters related to the selected user account; and
wherein the plurality of parameters (210) includes a type of account associated with each of the plurality of user accounts, and wherein a Calling Line Identifier for an incoming call (1320) is mapped to a number in an address book (1350) on the mobile device (1300), the address book (1350) specifying which numbers for outgoing calls (1320) are to be associated with a first user account type and which numbers for outgoing calls (1320) arc to be associated with a second user account type.

**14.** A network element comprising:
a component (130) configured to automatically select (220) one of a plurality of user accounts associated with a mobile device (110) based on an analysis of at least one of a plurality of parameters (210) associated with the plurality of user accounts and manage a communication according to parameters related to the selected user account;
wherein the plurality of parameters (210) includes a type of account associated with each of the plurality of user accounts, and wherein a Calling Line Identifier for an incoming call (1320) is mapped to a number in an address book (1350) on the mobile device (1300), the address book (1350) specifying which numbers for outgoing calls (1320) are to be associated with a first user account type and which numbers for outgoing calls (1320) are to be associated with a second user account type.
